# EUROPEAN PATENT SPECIFICATION

(11) **EP 4 282 547 B1**
(45) Date of publication and mention of the grant of the patent: **14.05.2025**
(21) Application number: 22883881.9
(22) Date of filing: 13.10.2022
(51) Int. Cl.: B08B 7/00, B08B 5/04, B05B 7/22, H01M 10/04

(54) **CLEANING EQUIPMENT AND CLEANING METHOD OF SEALING TOOL**
VORRICHTUNG UND VERFAHREN ZUM REINIGEN EINES DICHTUNGSWERKZEUGS
APPAREIL DE NETTOYAGE D'OUTIL D'ÉTANCHÉITÉ ET PROCÉDÉ DE NETTOYAGE

(30) Priority: 20.10.2021 KR 20210140230
(43) Date of publication of application: 29.11.2023
(73) Proprietor: LG Energy Solution, Ltd., Seoul 07335 (KR)
(72) Inventor: OH, Yoon Jong, Daejeon 34122 (KR)
(74) Representative: Goddar, Heinz J.
(86) International application number: PCT/KR2022/015523
(87) International publication number: WO 2023/068658

(56) References cited:
- CN-A- 110 695 004
- CN-A- 110 695 004
- CN-U- 207 013 387
- CN-U- 210 304 891
- CN-U- 212 760 132
- JP-A- 2002 337 822
- KR-A- 20110 135 183
- KR-A- 20180 028 714
- KR-B1- 101 983 372

## Description

### TECHNICAL FIELD

### CROSS-REFERENCE TO RELATED APPLICATION

The present application claims the benefit of the priority of Korean Patent Application No. 10-2021-0140230, filed on October 20, 2021.

### TECHNICAL FIELD

The present invention relates to cleaning equipment and a cleaning method, which are capable of automatically removing foreign substances, particularly organic substances accumulated in a silicon tool using plasma.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

The secondary batteries are classified into a can type secondary battery, in which an electrode assembly is embedded in a metal can, and a pouch type secondary battery in which an electrode assembly is embedded in a pouch. The can-type secondary battery has a structure including an electrode assembly, an electrolyte, a can accommodating the electrode assembly and the electrolyte, and a cap assembly mounted in an opening of the can. In addition, the pouch-type secondary battery has a structure including an electrode assembly, an electrolyte, and a pouch accommodating the electrode assembly and the electrolyte.

The pouch-type secondary battery accommodates the electrode assembly inside the pouch and then seals an edge surface of the pouch. Here, a sealing tool for the secondary battery is used.

The sealing tool for the secondary battery includes a pair of sealing blocks that seal both surfaces of a sealing part provided in the pouch in a compressed state.

However, the above-described sealing tool for the secondary battery has a problem in that foreign substances, particularly organic substances are accumulated on a pressing surface of each of the sealing blocks during a sealing process. Particularly, the above-described sealing tool for the secondary battery has a problem in that sealing force is weakened due to the foreign substances accumulated on the pressing surface, or quality defects occur as a thickness quality of the sealing part is deteriorated. In addition, the above-described sealing tool for the secondary battery has a problem in that the sealing part is stabbed by the foreign substances accumulated on the pressing surface of the sealing block, and thus, the quality defects occur. In the known prior art, CN 110 695 004 A relates to a cleaning device for a soft-packed battery core fixing box with two sets of plasma cleaning mechanisms, KR 2018 0028714 A discloses an apparatus for performing pre-sealing and a main sealing to continuously seal a pouch-shaped battery, KR 2011 0135183 A discloses a plasma cleaning apparatus for washing a secondary battery and CN 207 013 387 U discloses a battery core plasma cleaning device.

In order to solve the above problem, the foreign substances accumulated on the pressing surface of the sealing block are removed. However, there is a problem in that work efficiency is deteriorated because a worker manually performs a work, and the pressing surface of the sealing block is damaged because a knife or metal ruler is used.

### DISCLOSURE OF THE INVENTION

### TECHNICAL PROBLEM

The problem to be solved by the present invention is to cleaning equipment and a cleaning method of a sealing tool, in which foreign substances, particularly organic substances (PP, PET, etc.) accumulated on a pressing surface of a sealing block are automatically removed using plasma to effectively remove the foreign substances accumulated on the pressing surface of the sealing block, in particular, to effectively remove foreign substances accumulated on a pair of sealing blocks at the same time, thereby preventing sealing defects and quality defects of a sealing part provided in a pouch from occurring, significantly improving work efficiency, and preventing the pressing surface of the sealing block from being damaged.

### TECHNICAL SOLUTION

Cleaning equipment of a sealing tool according to the present invention for achieving the above object is configured to remove foreign substances accumulated on first and second sealing blocks provided symmetrically in a vertical direction. The cleaning equipment of a sealing tool includes: a plasma generation device configured to generate plasma; and a torch device provided with a torch head configured to eject the plasma generated in the plasma generation device to pressing surfaces of the first and second sealing blocks so as to remove the foreign substances accumulated on the pressing surfaces of the first and second sealing blocks, wherein the torch head includes: a first torch member provided with a first plasma outlet configured to eject the plasma generated in the plasma generation device to the pressing surface of the first sealing block; and a second torch member provided with a second plasma outlet configured to eject the plasma generated in the plasma generation device to the pressing surface of the second sealing block.

The torch head may further include a torch body to which the first torch member and the second torch member are coupled, wherein the torch body may include: a fixing plate; a first bracket which is provided on one end of the fixing plate and to which the first torch member is inclinedly coupled so that the first plasma outlet faces the pressing surface of the first sealing block; and a second bracket which is provided to the other end of the fixing plate and to which the second torch member is inclinedly coupled so that the second plasma outlet faces the pressing surface of the second sealing block.

The first plasma outlet of the first torch member may be spaced to be spaced a distance of 1.0 mm to 5.0 mm from the pressing surface of the first sealing block, and the second plasma outlet of the second torch member may be spaced to be spaced a distance of 1.0 mm to 5.0 mm from the pressing surface of the second sealing block.

The torch body may further include: a first angle adjusting piece through which the first torch member is coupled to the first bracket so as to be adjustable in angle toward the pressing surface of the first sealing block; and a second angle adjusting piece through which the second torch member is coupled to the second bracket so as to be adjustable in angle toward the pressing surface of the second sealing block.

The torch head may further include: a first height adjusting member through which the first bracket is coupled to one end of the fixing plate so as to be movable vertically; and a second height adjusting member through which the second bracket is coupled to the other end of the fixing plate so as to be movable vertically.

The first height adjusting member may include: a first guide piece to which the first bracket is fixed and which is coupled to one end of the fixing plate so as to be movable vertically; and a first adjusting screw which is screw-coupled to the first guide piece by passing through one plate of the fixing plate, wherein, when the first adjusting screw rotates forward or backward, the first guide piece moves upward or downward, and the second height adjusting member may include: a second guide piece to which the second bracket is fixed and which is coupled to the other end of the fixing plate so as to be movable vertically; and a second adjusting screw which is screw-coupled to the second guide piece by passing through the other plate of the fixing plate, wherein, when the second adjusting screw rotates forward or backward, the second guide piece moves upward or downward.

The torch device may further include a first moving member configured to allow the torch head to move in a longitudinal direction of the first and second sealing blocks, wherein the first moving member may include: a guide rail disposed in a longitudinal direction of the first and second sealing blocks; a guide piece configured to allow the torch head to be movable in the longitudinal direction of the first and second sealing blocks; and a first driving piece configured to allow the guide piece to move in the longitudinal direction of the first and second sealing blocks.

The torch device may include a second moving member configured to allow the torch head to move forward in a width direction of the first and second sealing blocks so that the torch head is disposed on the pressing surfaces of the first and second sealing blocks or returns to its original position, wherein the second moving member may include: a movable piece provided between the guide piece and the torch head; and a second driving piece configured to allow the torch head to move forward in the width direction of the first and second sealing blocks provided on the movable piece so that the torch head is disposed on the pressing surfaces of the first and second sealing blocks or returns to its original position.

The cleaning equipment may further include an exhaust device configured to remove smoke, odor, and harmful gases, which are generated while the foreign substances accumulated on the pressing surfaces of the first and second sealing blocks are removed.

The exhaust device may include an ozone remover configured to remove ozone contained in the harmful gases.

A cleaning method of a sealing tool is performed to remove foreign substances accumulated on first and second sealing blocks provided symmetrically in a vertical direction. The cleaning method of the sealing tool includes: a process (a) of generating plasma through a plasma generation device; and a process (b) of ejecting the plasma generated by the plasma generation device to pressing surfaces of the first and second sealing blocks to remove the foreign substances accumulated on the pressing surfaces of the first and second sealing blocks, wherein, in the process (b), the plasma generated in the plasma generation device is ejected to the pressing surface of the first sealing block through a first torch member provided in the torch head, and the plasma generated in the plasma generation device is ejected to the pressing surface of the second sealing block through a second torch member provided in the torch head to remove the foreign substances accumulated on the pressing surfaces of the first and second sealing blocks.

In the process (b), when the plasma is ejected on the pressing surface, radical oxygen (O) existing in the plasma and carbon (C), hydrogen (H), and oxygen (O), which exist in the foreign substances, may chemically react with each other to form carbon dioxide (CO₂) and water (H₂O) so as to be removed.

The cleaning method may further include, before performing the process (a), a process of allowing the torch device to move forward toward the first and second sealing blocks so that first and second torch members of the torch head are disposed to be spaced an effective distance from the pressing surfaces of the first and second sealing blocks.

The process (b) may further include a process of allowing the torch device to move in a longitudinal direction of the first and second sealing blocks, thereby removing the foreign substances accumulated on the entire pressing surfaces of the first and second sealing blocks.

The process (b) may further include a process of inhaling and removing smoke, odor, and harmful gases, which are generated while the foreign substances are removed, through an exhaust device.

### ADVANTAGEOUS EFFECTS

In the cleaning equipment and a cleaning method of the sealing tool, the foreign substances, particularly the organic substances (PP, PET, etc.) may be automatically removed using the plasma to effectively remove the foreign substances accumulated on the pressing surface of the sealing block, in particular, to effectively remove the foreign substances accumulated on the pair of sealing blocks at the same time, thereby preventing the sealing defects and the quality defects of the sealing part provided in the pouch from occurring, significantly improving the work efficiency, and preventing the pressing surface of the sealing block from being damaged.

### BRIEF DESCRIPTION OF THE DRAWINGS

FIG. 1 is a schematic process view illustrating cleaning equipment of a sealing tool according to a first embodiment of the present invention.
FIG. 2 is a front perspective view illustrating a torch device provided in the cleaning equipment of the sealing tool according to the first embodiment of the present invention.
FIG. 3 is a rear perspective view illustrating the torch device provided in the cleaning equipment of the sealing tool according to the first embodiment of the present invention.
FIG. 4 is a side view illustrating the torch device provided in the cleaning equipment of the sealing tool according to the first embodiment of the present invention.
FIG. 5 is a partial enlarged view of FIG. 2.
FIG. 6 is a partial enlarged view of FIG. 5.
FIG. 7 is a side view of FIG. 6.
FIG. 8 is a partial enlarged view of FIG. 6.
FIG. 9 is a partial enlarged view of FIG. 3.
FIG. 10 is a flowchart illustrating a cleaning method of the sealing tool according to the first embodiment of the present invention.
FIG. 11 is a perspective view illustrating a torch device of cleaning equipment of a sealing tool according to a second embodiment of the present invention.
FIG. 12 is a side view of FIG. 11.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to the present invention]

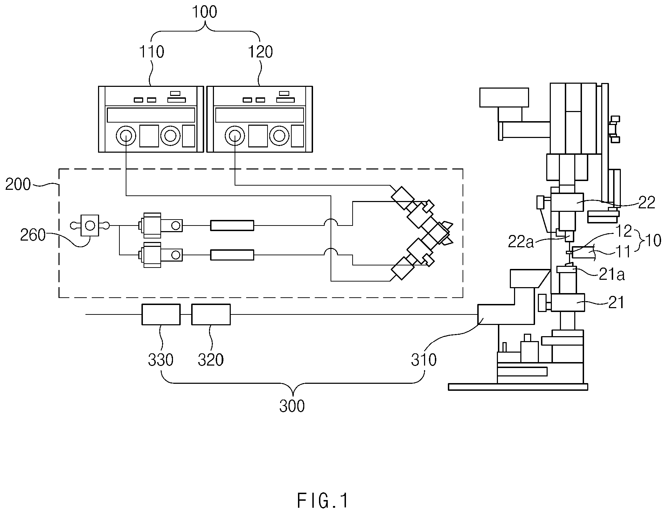

Referring to FIG. 1, a secondary battery of the present invention includes an electrode assembly and a pouch 10 accommodating the electrode assembly. The pouch 10 includes an accommodation part 11 accommodating the electrode assembly and a sealing part 12 sealing an edge of the accommodation part.

Here, the sealing part 12 of the pouch 10 is sealed using a sealing tool 20, and the sealing tool 20 includes first and second sealing blocks 21 and 22 disposed in a vertical direction. That is, the first and second sealing blocks 21 and 22 compress and seal the sealing part 12.

The sealing tool 20 having such a structure has a problem in that foreign substances are accumulated on pressing surfaces 21a and 22a of the first and second sealing blocks 21 and 22 during the compression process of the sealing part.

The foreign substances may be foreign matters, and the foreign substances may be polypropylene (PP) or polyethylene (PET).

If the foreign substances are accumulated on the pressing surfaces 21a and 22a of the first and second sealing blocks 21 and 22, quality defects of the sealing part, thickness defects of the sealing part, and marks such as stab and scratch on the sealing part may be prevented from occurring.

In order to remove, particularly, automatically remove the foreign substances accumulated on the pressing surfaces 21a and 22a of the first and second sealing blocks 21 and 22, the cleaning equipment of the sealing tool according to the first embodiment of the present invention is used.

That is, the cleaning equipment of the sealing tool according to the first embodiment of the present invention may remove the foreign substances accumulated on the pressing surfaces 21a and 22a of the first and second sealing blocks 21 and 22 by using the plasma and, in particular, may be automated to improve work efficiency.

Hereinafter, the cleaning equipment of the sealing tool according to the first embodiment of the present invention will be described in detail with reference to the accompanying drawings.

### [Cleaning equipment of sealing tool according to first embodiment of the present invention]

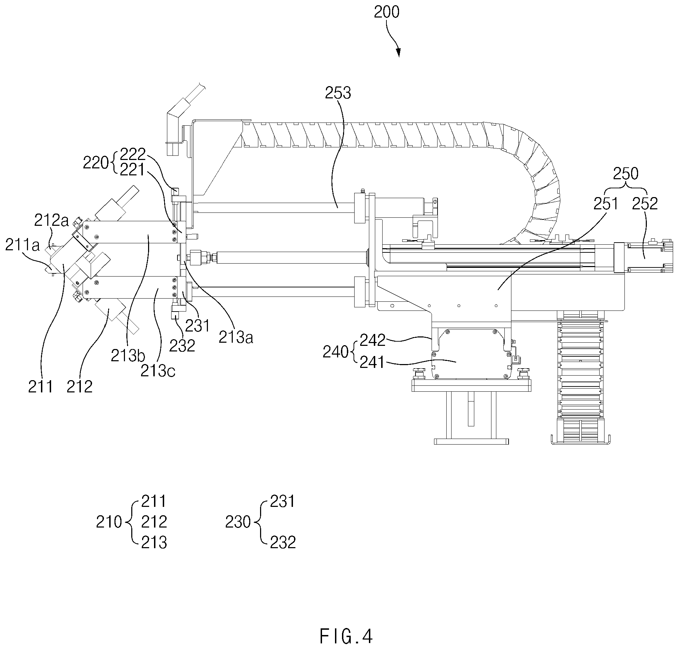

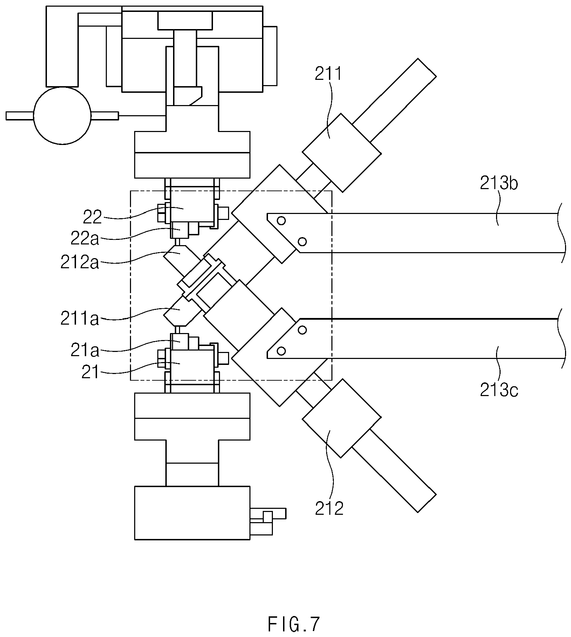

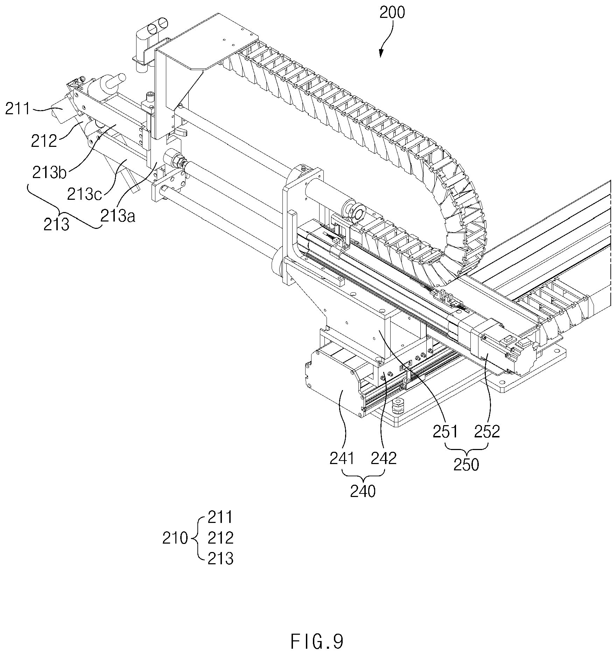

As illustrated in FIGS. 1 to 9, the cleaning equipment of the sealing tool according to the first embodiment of the present invention includes a plasma generation device 100, a torch device 200 automatically removing foreign substance accumulated on pressing surfaces 21a and 22a of first and second sealing blocks 21 and 22 by using plasma generated in the plasma generation device 100, and exhaust device 300 removing smoke, odor, and harmful gases, which are generated when removing the foreign substances.

### Plasma generation device

The plasma generation device 100 is configured to generate the plasma. The plasma refers to a state in which a gas is heated at a ultra-high temperature and is separated into electrons and ions having positive charges.

Referring to FIG. 1, the plasma generation device 100 includes a first plasma generator 110 and a second plasma generator 120. The first plasma generator 110 supplies the plasma to a first torch member 211, and the second plasma generator 120 supplies the plasma to a second torch member 212.

The plasma generation device is a commonly widely used device, and thus, detailed descriptions thereof will be omitted.

### Torch device

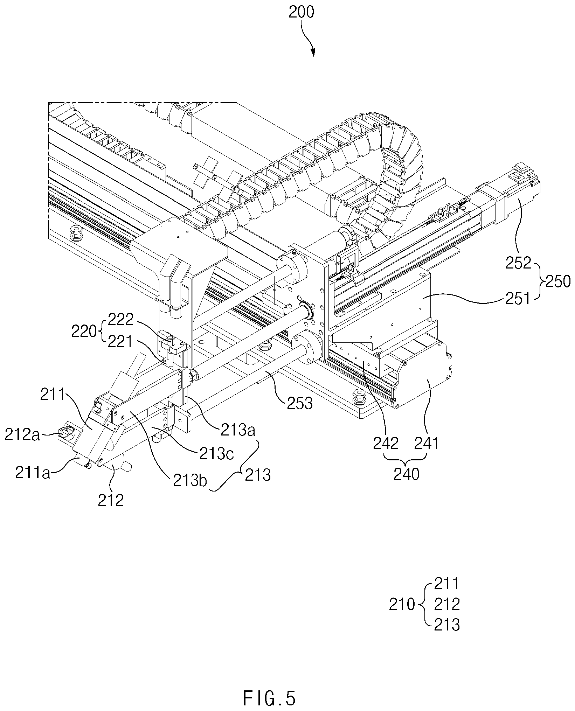

Referring to FIGS. 5 to 8, the torch device 200 is configured to remove the foreign substances accumulated on the pressing surfaces 21a and 22a of the first and second sealing blocks 21 and 22 by using the plasma supplied from the plasma generation device. That is, the torch device 200 includes a torch head 210, a first moving member 240, and a second moving member 250.

The torch head 210 has a structure which ejects the plasma generated by the plasma generation device to the pressing surfaces of the first and second sealing blocks to remove the foreign substances accumulated on the pressing surfaces of the first and second sealing blocks. That is, the torch head 210 includes a first torch member 211, a second torch member 212 and a torch body 213.

The first torch member 211 is provided with a first plasma outlet 211a that ejects the plasma generated by the first plasma generator of the plasma generation device to the pressing surface 21a of the first sealing block 21.

The second torch member 212 is provided with a second plasma outlet 212a that ejects the plasma generated by the second plasma generator of the plasma generation device to the pressing surface 22a of the second sealing block 22.

The torch body 213 has a structure which fixes the first torch member 211 in a state, in which the first plasma outlet 211a faces the pressing surface 21a of the first sealing block 21, and fixes the second torch member 212 in a state, in which the second plasma outlet 212a faces the pressing surface 22a of the second sealing block 22.

That is, the torch body 213 includes a fixing plate 213a, a first bracket 213b which is fixed to one end of the fixing plate 213a and to which the first torch member 211 is inclinedly coupled so that the first plasma outlet 211a faces the pressing surface of the first sealing block, and a second bracket 213c which is fixed to the other end of the fixing plate 213a and to which the second torch member 212 is inclinedly coupled so that the second plasma outlet 212a faces the pressing surface of the second sealing block.

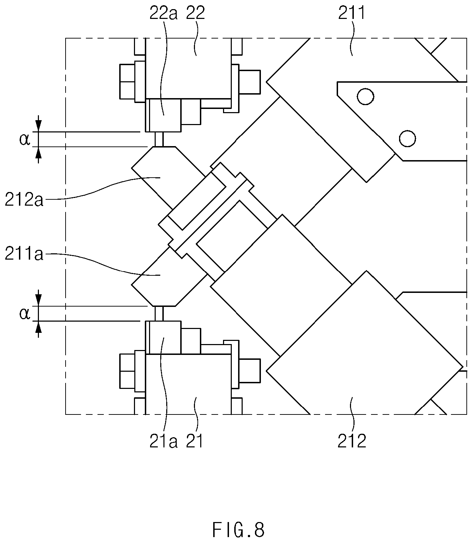

Referring to FIG. 8, the first plasma outlet 211a of the first torch member 211 has an effective distance α of 1.0 mm to 5.0 mm from the pressing surface 21a of the first sealing block 21, preferably has an effective distance (α) of 3.0 mm. That is, there is a distance of 1.0 mm to 5.0 mm between the first plasma outlet 211a and the pressing surface 21a of the first sealing block 21. In addition, the second plasma outlet 212a of the second torch member 212 has an effective distance of 1.0 mm to 5.0 mm from the pressing surface 22a of the second sealing block 22, preferably has an effective distance (α) of 3.0 mm. That is, there is a distance of 1.0 mm to 5.0 mm between the second plasma outlet 212a and the pressing surface 22a of the second sealing block 22. This is done for stably ejecting the plasma discharged from the plasma outlet to the pressing surface of the sealing block, and as a result, effectively removing the foreign substances accumulated on the pressing surface.

On the other hand, if the effective distance between the plasma outlet and the pressing surface is 1.0 mm or less, the plasma may not be effectively ejected over the entire pressing surface, and if the effective distance is 5.0 mm or more, there is a problem in that plasma efficiency is deteriorated.

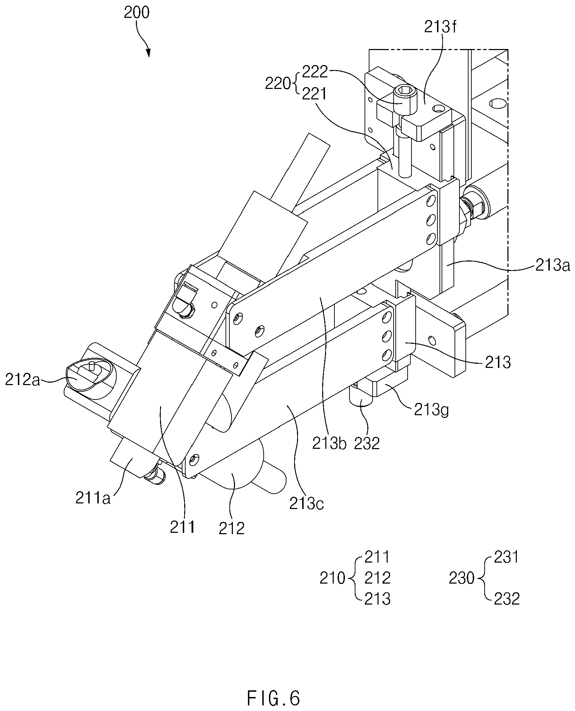

Referring to FIG. 6, the fixing plate 213a includes an upper plate which is provided at an upper right side with respect to a center line O and to which the first bracket 213b is fixed, and a lower plate which is provided at a lower left side with respect to the center line O and to which the second bracket 213c is fixed. In addition, the upper plate and the lower plate have a structure in which the plates are connected to each other. Thus, the fixing plate 213a may stably couple the first and second brackets 212b and 213c to each other. In particular, the first and second torch members 211 and 212 coupled to the first and second brackets may be disposed to cross each other without interference.

Referring to FIG. 6, the torch head 210 further includes first and second height adjusting members 220 and 230 which adjust heights of the first and second torch members 211 and 212 coupled to the first and second brackets 212b and 213c. That is, the first and second height adjusting members 220 and 230 may adjust the heights of the first and second torch members to adjust the effective distance between the first plasma outlet and the pressing surface of the first sealing block and the effective distance between the second plasma outlet and the pressing surface of the second sealing block.

For example, the first height adjusting member 220 is configured to vertically adjust the height of the first torch member through the first bracket and includes a first guide piece 221 to which the first bracket 213b is fixed and which is coupled to one end of the fixing plate 213a so as to be movable vertically, and a first adjusting screw 222 which is screw-coupled to the first guide piece 221 by passing through one plate 213f (a plate provided on an upper end of the fixing plate when viewed in FIG. 6) so that the first guide piece 221 moves upward or downward when the first adjusting screw rotates forward or backward. Thus, when the first adjusting screw 222 rotates forward or backward, the first guide piece 221 may ascend or descend along a screw thread of the first adjusting screw 222, and the first bracket 213b fixed to the guide piece may ascend or descend, and thus, the first torch member 211 coupled to the first bracket 213b may ascend or descend to adjust the height. This is done for adjusting the effective distance between the first plasma outlet and the pressing surface of the first sealing block.

In addition, the second height adjusting member 230 includes a second guide piece 231 to which the second bracket 213c is fixed and which is coupled to the other end of the fixing plate 213a so as to be movable vertically, and a second adjusting screw 232 which is screw-coupled to the second guide piece 231 by passing through the other plate 213g (a plate provided on a lower end of the fixing plate when viewed in FIG. 6) so that the second guide piece 231 moves upward or downward when the second adjusting screw rotates forward or backward. Thus, when the second adjusting screw 232 rotates forward or backward, the second guide piece 231 may ascend or descend along a screw thread of the second adjusting screw 232, and the second bracket 213c fixed to the guide piece may ascend or descend, and thus, the second torch member 212 coupled to the second bracket 213c may ascend or descend to adjust the height. This is done for adjusting the effective distance between the second plasma outlet and the pressing surface of the second sealing block.

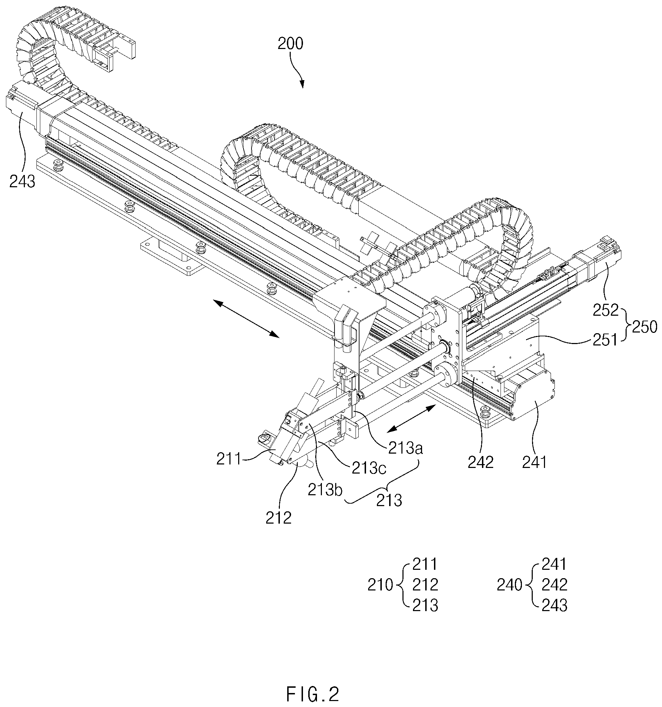

Referring to FIG. 2, the torch device 200 may include a first moving member 240 through which the torch head 210 moves in a longitudinal direction (left and right direction when viewed in FIG. 2) of the first and second sealing blocks to remove the foreign substances accumulated on the entire pressing surfaces of the first and second sealing blocks.

The first moving member 240 includes a guide rail 241 disposed in the longitudinal direction (left and right direction when viewed in FIG. 2) of the first and second sealing blocks, a guide piece 242 which is provided on the guide rail 241 so as to be movable in the longitudinal direction of the first and second sealing blocks and on which the torch head 210 is provided, and a first driving piece 243 through which the guide piece 242 moves in the longitudinal direction of the first and second sealing blocks or returns to its original position.

That is, when the first driving piece 243 operates, the first moving member 240 may allow the guide piece to move in the longitudinal direction of the first and second sealing blocks along the guide rail 241. Here, the torch head 210 fixed to the guide piece 242 may move to be interlocked, thereby removing the foreign substances accumulated on the entire pressing surfaces of the first and second sealing blocks. Here, the first moving member 240 may be a driving motor.

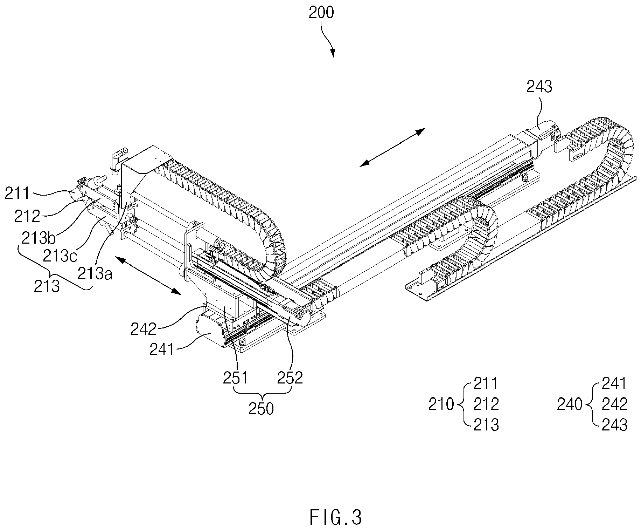

Referring to FIG. 3, the torch device 200 may include a second moving member 250 through which the torch device moves forward so that the torch head 210 is disposed on the pressing surfaces of the first and second sealing blocks 21 and 22 only when removing the foreign substances accumulated on the pressing surfaces of the first and second sealing blocks 21 and 22.

That is, the second moving member 250 includes a movable piece 251 provided between the guide piece 242 and the torch head 210 and a second driving piece 252 through which the torch head 210 provided on the movable piece 251 moves forward toward the pressing surfaces of the first and second sealing blocks or move backward. Thus, when the second driving piece 252 operates, the torch head 210 may move forward toward the pressing surfaces of the first and second sealing blocks or move backward. Here, the second driving piece 252 may be an electric cylinder.

The second moving member 250 may further include a guide rod 253 that guides the torch head 210 so that the torch head 210 moves straightly toward the pressing surfaces of the first and second sealing blocks. The guide rod 253 has one end fixed to the fixing plate 213a of the torch head 210 and the other end coupled to a vertical piece provided on the movable piece 251 so as to be movable toward the pressing surfaces of the first and second sealing blocks.

The torch device 200 may further include an air supply member 260 that ejects air together with the plasma to the pressing surfaces of the first and second sealing blocks.

Therefore, the torch device 200 may stably eject the plasma supplied from the plasma generation device to the pressing surfaces of the first and second sealing blocks, and as a result, effectively remove the foreign substances accumulated on the pressing surfaces of the first and second sealing blocks.

### Exhaust device

Referring to FIG. 1, the exhaust device 300 is configured to remove smoke, odor, and harmful gases, which are generated while the foreign substances accumulated on the pressing surfaces of the first and second sealing blocks are removed. That is, the exhaust device 300 includes an exhaust tube 310 which is disposed close to the pressing surfaces 21a and 22a of the first and second sealing blocks 21 and 22 and in which an inhaler configured to inhale the smoke, the odor, and the harmful gases, which are generated while the foreign substances accumulated on the pressing surfaces of the first and second sealing blocks are removed is installed, and a filter 320 configured to filter the smoke, the odor, and the harmful gases, which are inhaled into the exhaust tube 310.

Here, the exhaust device 300 may generate ozone (O3) by a chemical reaction between the plasma and the foreign substances and may further include an ozone remover 330 to remove the ozone.

Thus, the exhaust device 300 may effectively remove the harmful gases generated while the foreign substances accumulated on the pressing surfaces 21a and 22a of the first and second sealing blocks 21 and 22 are removed.

Therefore, the cleaning equipment of the sealing tool according to the first embodiment of the present invention may effectively remove the foreign substances accumulated on the pressing surfaces of the first and second sealing blocks by using the plasma, thereby maintaining the sealing quality, in particular, improving the work efficiency.

Hereinafter, a cleaning method of the sealing tool according to the first embodiment of the present invention will be described.

### [Cleaning method of sealing tool according to first embodiment of the present invention]

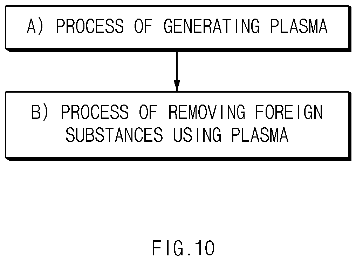

As illustrated in FIG. 10, the cleaning method of the sealing tool according to the first embodiment of the present invention is performed to remove foreign substances accumulated on pressing surfaces 21a and 22a of first and second sealing blocks 21 and 22, which are provided symmetrically in a vertical direction.

That is, the cleaning method of the sealing tool according to the first embodiment of the present invention includes a process (a) of generating plasma through a plasma generation device 100; and a process (b) of ejecting the plasma generated by the plasma generation device 100 to the pressing surfaces 21a and 22a of the first and second sealing blocks 21 and 22 to remove the foreign substances accumulated on the pressing surfaces 21a and 22a of the first and second sealing blocks 21 and 22.

A torch device 200 includes a torch head 210, a first height adjusting member 220, a second height adjusting member 230, a first moving member 240, a second moving member 250, and an air supply member 260. In addition, the torch head 210 includes a first torch member 211 and a second torch member 212.

Here, in the process (b), the plasma generated in the plasma generation device 100 may be ejected to the pressing surface 21a of the first sealing block 21 through a first plasma outlet 211a of the first torch member 211 coupled to one end of a torch body 213, and the plasma generated in the plasma generation device 100 may be ejected to the pressing surface 22a of the second sealing block 22 through a second plasma outlet of the second torch member 212 coupled to the other end of a torch body 213. Thus, the foreign substances accumulated on the pressing surfaces of the first and second sealing blocks may be removed.

For example, in the process (b), most of the foreign substances accumulated on the pressing surface may be organic materials (polypropylene, polyethylene), and when the plasma is ejected on the pressing surface, radical oxygen (O) existing in the plasma and carbon (C), hydrogen (H), and oxygen (O), which exist in the foreign substances, chemically react with each other to form carbon dioxide (CO₂) and water (H₂O) so as to be removed.

[Chemical formula] C+2O=CO₂ 2H+O=H₂O

Before performing the process (a), a process of allowing the torch device 200 to move forward toward the pressing surfaces 21a and 22a of the first and second sealing blocks 21 and 22 so that the first plasma outlet 211a of the first torch member 211 is disposed to be spaced an effective distance from the pressing surface of the first sealing block, and the second plasma outlet 121a of the second torch member 212 is disposed to be spaced an effective distance from the pressing surface of the second sealing block may be further performed.

That is, when there is no need to remove the foreign substances, the torch device is disposed to be spaced a set distance from the sealing tool. Thereafter, when removal of the foreign substances is required, the torch device 200 may move forward toward the sealing tool through the second moving member 250, and thus, the torch head 210 may be disposed on the pressing surfaces of the first and second sealing blocks 21 and 22.

The process (b) may further includes a process of allowing the torch device 200 to move in a longitudinal direction of the first and second sealing blocks, thereby removing the foreign substances accumulated on the entire pressing surfaces of the first and second sealing blocks.

That is, in the process (b), the torch device 200 may move in the longitudinal direction of the first and second sealing blocks through the first moving member 240 or return to its original position, and thus, the first and second torch members may pass through the entire pressing surfaces of the first and second sealing blocks, and as a result, the foreign substances accumulated on the entire pressing surfaces may be removed.

The process (b) may further include a process of removing the smoke, the odor, and the harmful gases, which are generated during the removal of the foreign substances by inhaling the smoke, the odor, and the harmful gases through the exhaust device 300.

That is, the exhaust device 300 may inhale the smoke, the odor, and the harmful gases, which are generated while the foreign substances accumulated on the pressing surfaces of the first and second sealing blocks are removed through the exhaust tube 310 in which the inhaler is installed, and the smoke, the odor, and the harmful gases may be filtered through a filter 320 so as to be removed. Particularly, the exhaust device 300 includes an ozone remover, and thus ozone generated by a chemical reaction between the plasma and the foreign substances may be removed.

Therefore, in the cleaning method of the sealing tool according to the first embodiment of the present invention, the foreign substances accumulated on the pressing surfaces of the first and second sealing blocks may be removed through the above processes.

Hereinafter, in descriptions of another embodiment of the present invention, constituents having the same function as the above-mentioned embodiment have been given the same reference numeral in the drawings, and thus duplicated description will be omitted.

### [Cleaning equipment of sealing tool according to second embodiment of the present invention]

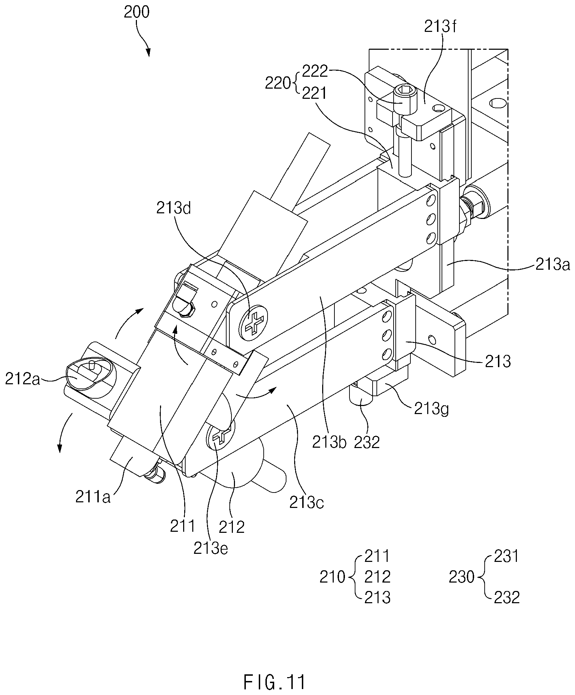

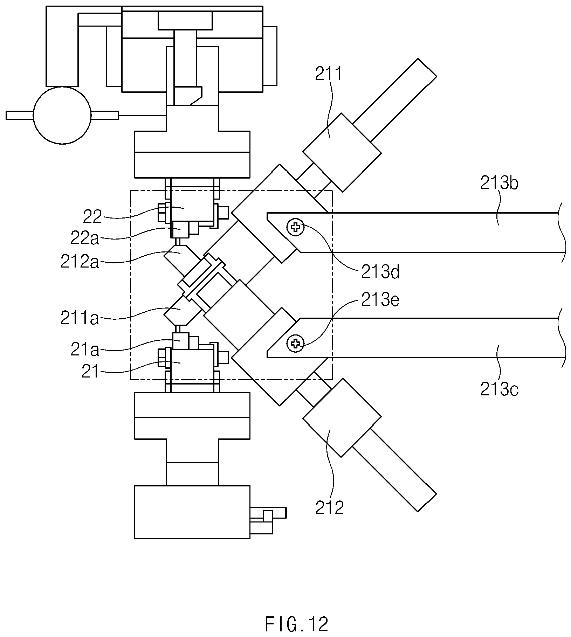

As illustrated in FIGS. 11 and 12, cleaning equipment of a sealing tool according to a second embodiment of the present invention may include a plasma generator 100 and a torch device 200 having a torch head 210, and the torch head 210 may include a first torch member 211, a second torch member 212 and a torch body 213.

Here, the torch body 213 may include a first angle adjusting piece 213b through which the first torch member 211 is coupled to a first bracket 213b so as to be adjustable in angle toward a pressing surface of a first sealing block.

That is, the first angle adjusting piece 213d has a bolt structure that is capable of being tightened or loosened and may be screw-coupled to a side portion of the first sealing block by passing through the first bracket 213b. Thus, when the first angle adjusting piece 213d is loosened, an angle of the first sealing block may be adjusted in a vertical direction when viewed in FIG. 12, with respect to the first angle adjusting piece 213d, and when the first angle adjusting piece 213d is tightened, the first sealing block may be compressed to the first bracket 213b, thereby fixing the first sealing block.

In addition, the torch body 213 may include a second angle adjusting piece 213e through which the second torch member 212 is coupled to a second bracket 213c so as to be adjustable in angle toward a pressing surface of a second sealing block.

That is, the second angle adjusting piece 213e has a bolt structure that is capable of being tightened or loosened and may be screw-coupled to a side portion of the second sealing block by passing through the second bracket 213b. Thus, when the second angle adjusting piece 213e is loosened, an angle of the second sealing block may be adjusted in the vertical direction when viewed in FIG. 12, with respect to the second angle adjusting piece 213e, and when the second angle adjusting piece 213e is tightened, the second sealing block may be compressed to the second bracket 213c, thereby fixing the second sealing block.

Therefore, the cleaning equipment of the sealing tool according to the second embodiment of the present invention may include the first and second angle adjusting pieces 213d and 213e to adjust the inclined angles of the first and second sealing blocks. As a result, first and second plasma outlets may be disposed toward the pressing surfaces of the first and second sealing blocks.

Accordingly, the scope of the present invention is defined by the appended claims more than the foregoing description and the exemplary embodiments described therein. Various modifications made within the scope of the claims of the invention are to be regarded to be part of the present invention.

### [Description of the Symbols]

10: Pouch
11: Accommodation part
12: Sealing part
20: Sealing tool
21: First sealing block
21a: Pressing surface
22: Second sealing block
22a: Pressing surface
100: Plasma generation device
200: Torch device
210: Torch head
211: First torch member
212: Second torch member
213: Torch body
213a: Fixing plate
213b: First bracket
213c: Second bracket
213d: First angle adjusting piece
213e: Second angle adjusting piece
220: First height adjusting member
221: First guide piece
222: First adjusting screw
230: Second height adjusting member
231: Second guide piece
232: Second adjusting screw
240: First moving member
241: Guide rail
242: Guide piece
243: First driving piece
250: Second moving member
251: Movable piece
252: Second driving piece
260: Air supply member
300: Exhaust device
310: Exhaust tube
320: Filter
330: Ozone remover

## Claims

1. Cleaning equipment of a sealing tool (20), which is configured to remove foreign substances accumulated on first and second sealing blocks (21, 22) provided symmetrically in a vertical direction, the cleaning equipment comprising:
a plasma generation device (100) configured to generate plasma; and
a torch device (200) provided with a torch head (210) configured tc eject the plasma generated in the plasma generation device (100) to pressing surfaces (21a, 22a) of the first and second sealing blocks (21, 22) so as to remove the foreign substances accumulated on the pressing surfaces of the first and second sealing blocks (21, 22),
wherein the torch head (210) comprises:
a first torch member (211) provided with a first plasma outlet (211a) configured to eject the plasma generated in the plasma generation device (100) to the pressing surface (21a) of the first sealing block (21); and
a second torch member (212) provided with a second plasma outlet (212a) configured to eject the plasma generated in the plasma generation device (100) to the pressing surface (22a) of the second sealing block (22).

2. The cleaning equipment of claim 1, wherein the torch head (210) further comprises a torch body (213) to which the first torch member (211) and the second torch member (212) are coupled,
wherein the torch body (213) comprises:
a fixing plate (213a);
a first bracket (213b) which is provided on one end of the fixing plate (213a) and to which the first torch member (211) is inclinedly coupled so that the first plasma outlet (211a) faces the pressing surface (21a) of the first sealing block (21); and
a second bracket (213b) which is provided to the other end of the fixing plate (213a) and to which the second torch member (212) is inclinedly coupled so that the second plasma outlet (212a) faces the pressing surface (22a) of the second sealing block (22).

3. The cleaning equipment of claim 2, wherein the first plasma outlet (211a) of the first torch member (211) is spaced to be spaced a distance of 1.0 mm to 5.0 mm from the pressing surface (21a) of the first sealing block (21), and
the second plasma outlet (212a) of the second torch member (212) is spaced to be spaced a distance of 1.0 mm to 5.0 mm from the pressing surface (22a) of the second sealing block (22).

4. The cleaning equipment of claim 2, wherein the torch body (213) further comprises:
a first angle adjusting piece (213d) through which the first torch member (211) is coupled to the first bracket (213b) so as to be adjustable in angle toward the pressing surface (21a) of the first sealing block (21); and
a second angle adjusting piece (213e) through which the second torch member (212) is coupled to the second bracket (213c) so as to be adjustable in angle toward the pressing surface (22a) of the second sealing block (22).

5. The cleaning equipment of claim 2, wherein the torch head (210) further comprises:
a first height adjusting member (220) through which the first bracket (213b) is coupled to one end of the fixing plate (213a) so as to be movable vertically; and
a second height adjusting member (230) through which the second bracket (213c) is coupled to the other end of the fixing plate (213a) so as to be movable vertically.

6. The cleaning equipment of claim 5, wherein the first height adjusting member (220) comprises:
a first guide piece (221) to which the first bracket (213b) is fixed and which is coupled to one end of the fixing plate (213a) so as to be movable vertically; and
a first adjusting screw (222) which is screw-coupled to the first guide piece (221) by passing through one plate of the fixing plate (213a),
wherein, when the first adjusting screw (222) rotates forward or backward, the first guide piece (221) moves upward or downward, and
the second height adjusting member (230) comprises:
a second guide piece (231) to which the second bracket (213c) is fixed and which is coupled to the other end of the fixing plate (213a) so as to be movable vertically; and
a second adjusting screw (232) which is screw-coupled to the second guide piece (231) by passing through the other plate of the fixing (213a), wherein, when the second adjusting screw (232) rotates forward or backward, the second guide piece (231) moves upward or downward.

7. The cleaning equipment of claim 1, wherein the torch device (200) further comprises a first moving member (240) configured to allow the torch head (210) to move in a longitudinal direction of the first and second sealing blocks (21, 22),
wherein the first moving member (240) comprises:
a guide rail (241) disposed in a longitudinal direction of the first and second blocks (21, 22);
a guide piece (242) configured to allow the torch head (210) to be movable in the longitudinal direction of the first and second sealing blocks (21, 22); and
a first driving piece (243) configured to allow the guide piece (242) to move in the longitudinal direction of the first and second sealing blocks (21, 22).

8. The cleaning equipment of claim 7, wherein the torch device (200) comprises a second moving member (250) configured to allow the torch head (210) to move forward in a width direction of the first and second sealing blocks (21, 22) so that the torch head (210) is disposed on the pressing surfaces (21a, 22a) of the first and second sealing (21, 22) or returns to its original position,
wherein the second moving member (250) comprises:
a movable piece (251) provided between the guide piece (242) and the torch head (210) and
a second driving piece (252) configured to allow the torch head (210) to move forward in the width direction of the first and second sealing blocks (21, 22) provided on the movable (251) so that the torch head (210) is disposed on the pressing surfaces (21a, 22a) of the first and second sealing blocks (21, 22) or returns to its original position.

9. The cleaning equipment of claim 1, further comprising an exhaust device (300) configured to remove smoke, odor, and harmful gases, which are generated while the foreign substances accumulated on the pressing surfaces (21a, 22a) of the first and second sealing blocks (21, 22) are removed.

10. The cleaning equipment of claim 9, wherein the exhaust device (300) comprises an ozone remover configured to remove ozone contained in the harmful gases.

11. A cleaning method of a sealing tool, which is performed to remove foreign substances accumulated on first and second sealing blocks (21, 22) provided symmetrically in a vertical direction, the cleaning method comprising:
a process (a) of generating plasma through a plasma generation device (100); and
a process (b) of ejecting the plasma generated in the plasma generation device (100) by a torch device (200) with a torch head (210) to pressing surfaces (21a, 22a) of the first and second sealing blocks (21, 22) to remove the foreign substances accumulated on the pressing surfaces (21a, 22a) of the first and second sealing blocks (21, 22),
wherein, in the process (b), the plasma generated in the plasma generation device (100) is ejected to the pressing surface (21a) of the first sealing block (21) through a first torch member (211) provided in the torch head (210), and the plasma generated in the plasma generation device (100) is ejected to the pressing surface (22a) of the second sealing block (22) through a second torch member (212) provided in the torch head (200) to remove the foreign substances accumulated on the pressing surfaces (21a, 22a) of the first and second sealing blocks (21, 22).

12. The cleaning method of claim 11, wherein, in the process (b), when the plasma is ejected on the pressing surface, radical oxygen (O) existing in the plasma and carbon (C), hydrogen (H), and oxygen (O), which exist in the foreign substances, chemically react with each other to form carbon dioxide (CO₂) and water (H₂O) so as to be removed.

13. The cleaning method of claim 11, further comprising, before performing the process (a), a process of allowing the torch device (200) to move forward toward the first and second sealing blocks (21, 22) so that first and second torch members (211, 212) of the torch head (210) are disposed to be spaced an effective distance from the pressing surfaces (21a, 22a) of the first and second sealing blocks (21, 22).

14. The cleaning method of claim 11, wherein the process (b) further comprises a process of allowing the torch device (200) to move in a longitudinal direction of the first and second sealing blocks (21, 22), thereby removing the foreign substances accumulated on the entire pressing surfaces (21a, 22a) of the first and second sealing blocks (21, 22).

15. The cleaning method of claim 11, wherein the process (b) further comprises a process of inhaling and removing smoke, odor, and harmful gases, which are generated while the foreign substances are removed, through an exhaust device (300).

## Patentansprüche

1. Reinigungsausrüstung eines Versiegelungswerkzeugs (20), die konfiguriert ist, um Fremdsubstanzen zu entfernen, die sich an ersten und zweiten Versiegelungsblöcken (21, 22) angesammelt haben, die symmetrisch in einer vertikalen Richtung vorgesehen sind, wobei die Reinigungsausrüstung umfasst:
eine Plasmaerzeugungsvorrichtung (100), die konfiguriert ist, um Plasma zu erzeugen; und
eine Brennervorrichtung (200), die mit einem Brennerkopf (210) versehen ist, der konfiguriert ist, um das Plasma, das in der Plasmaerzeugungsvorrichtung (100) erzeugt wird, auf Pressflächen (21a, 22a) der ersten und zweiten Versiegelungsblöcke (21, 22) auszustoßen, um die Fremdsubstanzen zu entfernen, die sich auf den Pressflächen der ersten und zweiten Versiegelungsblöcke (21, 22) angesammelt haben,
wobei der Brennerkopf (210) umfasst:
ein erstes Brennerelement (211), das mit einem ersten Plasmaauslass (211a) versehen ist, der konfiguriert ist, um das Plasma, das in der Plasmaerzeugungsvorrichtung (100) erzeugt wird, auf die Pressfläche (21a) des ersten Versiegelungsblocks (21) auszustoßen; und
ein zweites Brennerelement (212), das mit einem zweiten Plasmaauslass (212a) versehen ist, der konfiguriert ist, um das Plasma, das in der Plasmaerzeugungsvorrichtung (100) erzeugt wird, auf die Pressfläche (22a) des zweiten Versiegelungsblocks (22) auszustoßen.

2. Reinigungsausrüstung nach Anspruch 1, wobei der Brennerkopf (210) ferner einen Brennerkörper (213) umfasst, mit dem das erste Brennerelement (211) und das zweite Brennerelement (212) gekoppelt sind,
wobei der Brennerkörper (213) umfasst:
eine Befestigungsplatte (213a);
eine erste Halterung (213b), die an einem Ende der Befestigungsplatte (213a) vorgesehen ist und mit der das erste Brennerelement (211) geneigt gekoppelt ist, so dass der erste Plasmaauslass (211a) der Pressfläche (21a) des ersten Versiegelungsblocks (21) zugewandt ist; und
eine zweite Halterung (213b), die an dem anderen Ende der Befestigungsplatte (213a) vorgesehen ist und mit der das zweite Brennerelement (212) geneigt gekoppelt ist, so dass der zweite Plasmaauslass (212a) der Pressfläche (22a) des zweiten Versiegelungsblocks (22) zugewandt ist.

3. Reinigungsausrüstung nach Anspruch 2, wobei der erste Plasmaauslass (211a) des ersten Brennerelements (211) beabstandet ist, um einen Abstand von 1,0 mm bis 5,0 mm von der Pressfläche (21a) des ersten Versiegelungsblocks (21) beabstandet zu sein, und
der zweite Plasmaauslass (212a) des zweiten Brennerelements (212) beabstandet ist, um einen Abstand von 1,0 mm bis 5,0 mm von der Pressfläche (22a) des zweiten Versiegelungsblocks (22) beabstandet zu sein.

4. Reinigungsausrüstung nach Anspruch 2, wobei der Brennerkörper (213) ferner umfasst:
ein erstes Winkeleinstellstück (213d), durch das das erste Brennerelement (211) mit der ersten Halterung (213b) gekoppelt ist, um im Winkel zu der Pressfläche (21a) des ersten Versiegelungsblocks (21) einstellbar zu sein; und
ein zweites Winkeleinstellstück (213e), durch das das zweite Brennerelement (212) mit der zweiten Halterung (213c) gekoppelt ist, um im Winkel zu der Pressfläche (22a) des zweiten Versiegelungsblocks (22) einstellbar zu sein.

5. Reinigungsausrüstung nach Anspruch 2, wobei der Brennerkopf (210) ferner umfasst:
ein erstes Höheneinstellelement (220), durch das die erste Halterung (213b) mit einem Ende der Befestigungsplatte (213a) gekoppelt ist, um vertikal beweglich zu sein; und
ein zweites Höheneinstellelement (230), durch das die zweite Halterung (213c) mit dem anderen Ende der Befestigungsplatte (213a) gekoppelt ist, um vertikal beweglich zu sein.

6. Reinigungsausrüstung nach Anspruch 5, wobei das erste Höheneinstellelement (220) umfasst:
ein erstes Führungsstück (221), an dem die erste Halterung (213b) befestigt ist und das mit einem Ende der Befestigungsplatte (213a) gekoppelt ist, um vertikal beweglich zu sein; und
eine erste Einstellschraube (222), die mit dem ersten Führungsstück (221) schraubgekoppelt ist, indem sie durch eine Platte der Befestigungsplatte (213a) verläuft, wobei, wenn sich die erste Einstellschraube (222) vorwärts oder rückwärts dreht, sich das erste Führungsstück (221) nach oben oder unten bewegt, und
das zweite Höheneinstellelement (230) umfasst:
ein zweites Führungsstück (231), an dem die zweite Halterung (213c) befestigt ist und das mit dem anderen Ende der Befestigungsplatte (213a) gekoppelt ist, um vertikal beweglich zu sein; und
eine zweite Einstellschraube (232), die mit dem zweiten Führungsstück (231) schraubgekoppelt ist, indem sie durch die andere Platte der Befestigung (213a) verläuft, wobei, wenn sich die zweite Einstellschraube (232) vorwärts oder rückwärts dreht, sich das zweite Führungsstück (231) nach oben oder unten bewegt.

7. Reinigungsausrüstung nach Anspruch 1, wobei die Brennervorrichtung (200) ferner ein erstes Bewegungselement (240) umfasst, das konfiguriert ist, um es dem Brennerkopf (210) zu ermöglichen, sich in einer Längsrichtung der ersten und zweiten Versiegelungsblöcke (21, 22) zu bewegen,
wobei das erste Bewegungselement (240) umfasst:
eine Führungsschiene (241), die in einer Längsrichtung der ersten und zweiten Blöcke (21, 22) angeordnet ist;
ein Führungsstück (242), das konfiguriert ist, um es dem Brennerkopf (210) zu ermöglichen, in der Längsrichtung der ersten und zweiten Versiegelungsblöcke (21, 22) beweglich zu sein; und
ein erstes Antriebsstück (243), das konfiguriert ist, um es dem Führungsstück (242) zu ermöglichen, sich in der Längsrichtung der ersten und zweiten Versiegelungsblöcke (21, 22) zu bewegen.

8. Reinigungsausrüstung nach Anspruch 7, wobei die Brennervorrichtung (200) ein zweites Bewegungselement (250) umfasst, das konfiguriert ist, um es dem Brennerkopf (210) zu ermöglichen, sich in einer Breitenrichtung der ersten und zweiten Versiegelungsblöcke (21, 22) vorwärts zu bewegen, so dass der Brennerkopf (210) auf den Pressflächen der ersten und zweiten Versiegelung (21, 22) angeordnet ist oder in seine ursprüngliche Position zurückkehrt,
wobei das zweite Bewegungselement (250) umfasst:
ein bewegliches Stück (251), das zwischen dem Führungsstück (242) und dem Brennerkopf (210) bereitgestellt ist; und
ein zweites Antriebsstück (252), das konfiguriert ist, um es dem Brennerkopf (210) zu ermöglichen, sich in der Breitenrichtung der ersten und zweiten Versiegelungsblöcke (21, 22), die auf dem beweglichen Stück (251) bereitgestellt sind, vorwärts zu bewegen, so dass der Brennerkopf (210) auf den Pressflächen (21a, 22a) der ersten und zweiten Versiegelungsblöcke (21, 22) angeordnet ist oder in seine ursprüngliche Position zurückkehrt.

9. Reinigungsausrüstung nach Anspruch 1, ferner umfassend eine Abgasvorrichtung (300), die konfiguriert ist, um Rauch, Geruch und schädliche Gase zu entfernen, die erzeugt werden, während die Fremdsubstanzen, die sich auf den Pressflächen (21a, 22a) der ersten und zweiten Versiegelungsblöcke (21, 22) angesammelt haben, entfernt werden.

10. Reinigungsausrüstung nach Anspruch 9, wobei die Abgasvorrichtung (300) einen Ozonentferner umfasst, der konfiguriert ist, um Ozon zu entfernen, das in den schädlichen Gasen enthalten ist.

11. Reinigungsverfahren eines Versiegelungswerkzeugs, das durchgeführt wird, um Fremdsubstanzen zu entfernen, die sich an ersten und zweiten Versiegelungsblöcken (21, 22) angesammelt haben, die symmetrisch in einer vertikalen Richtung vorgesehen sind, wobei das Reinigungsverfahren umfasst:
einen Prozess (a) des Erzeugens von Plasma durch eine Plasmaerzeugungsvorrichtung (100); und
einen Prozess (b) des Ausstoßens des Plasmas, das in der Plasmaerzeugungsvorrichtung (100) erzeugt wird, durch eine Brennervorrichtung (200) mit einem Brennerkopf (210) auf Pressflächen (21a, 22a) der ersten und zweiten Versiegelungsblöcke (21, 22), um die Fremdsubstanzen zu entfernen, die sich auf den Pressflächen (21a, 22a) der ersten und zweiten Versiegelungsblöcke (21, 22) angesammelt haben,
wobei in dem Prozess (b) das Plasma, das in der Plasmaerzeugungsvorrichtung (100) erzeugt wird, auf die Pressfläche (21a) des ersten Versiegelungsblocks (21) durch ein erstes Brennerelement (211) ausgestoßen wird, das in dem Brennerkopf (210) vorgesehen ist, und das Plasma, das in der Plasmaerzeugungsvorrichtung (100) erzeugt wird, auf die Pressfläche (22a) des zweiten Versiegelungsblocks (22) durch ein zweites Brennerelement (212) ausgestoßen wird, das in dem Brennerkopf (200) vorgesehen ist, um die Fremdsubstanzen zu entfernen, die sich auf den Pressflächen (21a, 22a) der ersten und zweiten Versiegelungsblöcke (21, 22) angesammelt haben.

12. Reinigungsverfahren nach Anspruch 11, wobei in dem Prozess (b), wenn das Plasma auf die Pressfläche ausgestoßen wird, Radikalsauerstoff (O), der in dem Plasma vorhanden ist, und Kohlenstoff (C), Wasserstoff (H) und Sauerstoff (O), die in den Fremdsubstanzen vorhanden sind, chemisch miteinander reagieren, um Kohlendioxid (CO₂) und Wasser (H₂O) zu bilden, um entfernt zu werden.

13. Reinigungsverfahren nach Anspruch 11, ferner umfassend, vor dem Durchführen des Prozesses (a), einen Prozess des Ermöglichens, dass sich die Brennervorrichtung (200) vorwärts zu den ersten und zweiten Versiegelungsblöcken (21, 22) bewegt, so dass erste und zweite Brennerelemente (211, 212) des Brennerkopfs (210) angeordnet sind, um einen effektiven Abstand von den Pressflächen (21a, 22a) der ersten und zweiten Versiegelungsblöcke (21, 22) beabstandet zu sein.

14. Reinigungsverfahren nach Anspruch 11, wobei der Prozess (b) ferner einen Prozess des Ermöglichens umfasst, dass sich die Brennervorrichtung (200) in einer Längsrichtung der ersten und zweiten Versiegelungsblöcke (21, 22) bewegt, wodurch die Fremdsubstanzen entfernt werden, die sich auf den gesamten Pressflächen (21a, 22a) der ersten und zweiten Versiegelungsblöcke (21, 22) angesammelt haben.

15. Reinigungsverfahren nach Anspruch 11, wobei der Prozess (b) ferner einen Prozess des Einatmens und Entfernens von Rauch, Geruch und schädlichen Gasen, die erzeugt werden, während die Fremdsubstanzen entfernt werden, durch eine Abgasvorrichtung (300) umfasst.

## Revendications

1. Appareil de nettoyage d'un outil d'étanchéité (20), qui est configuré pour éliminer des substances étrangères accumulées sur des premier et deuxième blocs d'étanchéité (21, 22) fournis symétriquement dans une direction verticale, l'appareil de nettoyage comprenant :
un dispositif de génération de plasma (100) configuré pour générer un plasma ; et
un dispositif de chalumeau (200) ayant une tête de chalumeau (210) configuré pour éjecter le plasma généré dans le dispositif de génération de plasma (100) vers des surfaces sous pression (21a, 22a) des premier et deuxième blocs d'étanchéité (21, 22) de façon à éliminer les substances étrangères accumulées sur les surfaces sous pression des premier et deuxième blocs d'étanchéité (21, 22),
dans lequel la tête de chalumeau (210) comprend :
un premier élément de chalumeau (211) ayant un premier orifice de décharge de plasma (211a) configuré pour éjecter le plasma généré dans le dispositif de génération de plasma (100) vers la surface sous pression (21a) du premier bloc d'étanchéité (21) ; et
un deuxième élément de chalumeau (212) ayant un deuxième orifice de décharge de plasma (212a) configuré pour éjecter le plasma généré dans le dispositif de génération de plasma (100) vers la surface sous pression (22a) du deuxième bloc d'étanchéité (22).

2. Appareil de nettoyage selon la revendication 1, dans lequel la tête de chalumeau (210) comprend en outre un corps de torche (213) auquel le premier élément de chalumeau (211) et le deuxième élément de chalumeau (212) sont couplés,
dans lequel le corps de torche (213) comprend :
une plaque de fixation (213a) ;
un premier support (213b) qui est fourni sur l'une des extrémités de la plaque de fixation (213a) et auquel le premier élément de chalumeau (211) est couplé de manière inclinée de sorte que le premier orifice de décharge de plasma (211a) est face à la surface sous pression (21a) du premier bloc d'étanchéité (21) ; et
un deuxième support (213b) qui est fourni à l'autre extrémité de la plaque de fixation (213a) et auquel le deuxième élément de chalumeau (212) est couplé de manière inclinée de sorte que le deuxième orifice de décharge de plasma (212a) est face à la surface sous pression (22a) du deuxième bloc d'étanchéité (22).

3. Appareil de nettoyage selon la revendication 2, dans lequel le premier orifice de décharge de plasma (211a) du premier élément de chalumeau (211) est espacé pour être à une distance de 1,0 mm à 5,0 mm de la surface sous pression (21a) du premier bloc d'étanchéité (21), et
le deuxième orifice de décharge de plasma (212a) du deuxième élément de chalumeau (212) est espacé pour être à une distance de 1,0 mm à 5,0 mm de la surface sous pression (22a) du deuxième bloc d'étanchéité (22).

4. Appareil de nettoyage selon la revendication 2, dans lequel le corps de torche (213) comprend en outre :
une première pièce d'ajustement d'angle (213d) à travers laquelle le premier élément de chalumeau (211) est couplé au premier support (213b) de façon à ce que l'angle soit ajustable vers la surface sous pression (21a) du premier bloc d'étanchéité (21) ; et
une deuxième pièce d'ajustement d'angle (213e) à travers laquelle le deuxième élément de chalumeau (212) est couplé au deuxième support (213c) de façon à ce que l'angle soit ajustable vers la surface sous pression (22a) du deuxième bloc d'étanchéité (22).

5. Appareil de nettoyage selon la revendication 2, dans lequel la tête de chalumeau (210) comprend en outre :
un premier élément d'ajustement de hauteur (220) à travers lequel le premier support (213b) est couplé à l'une des extrémités de la plaque de fixation (213a) de façon à être mobile verticalement ; et
un deuxième élément d'ajustement de hauteur (230) à travers lequel le deuxième support (213c) est couplé à l'autre extrémité de la plaque de fixation (213a) de façon à être mobile verticalement.

6. Appareil de nettoyage selon la revendication 5, dans lequel le premier élément d'ajustement de hauteur (220) comprend :
une première pièce de guidage (221) à laquelle le premier support (213b) est fixé et qui est couplée à l'une des extrémités de la plaque de fixation (213a) de façon à être mobile verticalement ; et
une première vis d'ajustement (222) qui est couplée par vissage à la première pièce de guidage (221) en passant à travers l'une des extrémités de la plaque de fixation (213a), dans lequel, quand la première vis d'ajustement (222) tourne en avant ou en arrière, la première pièce de guidage (221) se déplace vers le haut ou vers le bas, et
le deuxième élément d'ajustement de hauteur (230) comprend :
une deuxième pièce de guidage (231) à laquelle le deuxième support (213c) est fixé et qui est couplée à l'autre extrémité de la plaque de fixation (213a) de façon à être mobile verticalement ; et
une deuxième vis d'ajustement (232) qui est couplée par vissage à la deuxième pièce de guidage (231) en passant à travers l'autre extrémité de la plaque de fixation (213a), dans lequel, quand la deuxième vis d'ajustement (232) tourne en avant ou en arrière, la deuxième pièce de guidage (231) se déplace vers le haut ou vers le bas.

7. Appareil de nettoyage selon la revendication 1, dans lequel le dispositif de chalumeau (200) comprend en outre un premier élément mobile (240) configuré pour permettre à la tête de chalumeau (210) de se déplacer dans une direction longitudinale des premier et deuxième blocs d'étanchéité (21, 22),
dans lequel le premier élément mobile (240) comprend :
un rail de guidage (241) disposé dans une direction longitudinale des premier et deuxième blocs (21, 22) ;
une pièce de guidage (242) configurée pour permettre à la tête de chalumeau (210) d'être mobile dans la direction longitudinale des premier et deuxième blocs d'étanchéité (21, 22) ; et
une première pièce d'entraînement (243) configurée pour permettre à la pièce de guidage (242) de se déplacer dans la direction longitudinale des premier et deuxième blocs d'étanchéité (21, 22).

8. Appareil de nettoyage selon la revendication 7, dans lequel le dispositif de chalumeau (200) comprend un deuxième élément mobile (250) configuré pour permettre à la tête de chalumeau (210) de se déplacer vers l'avant dans une direction de largeur des premier et deuxième blocs d'étanchéité (21, 22) de sorte que la tête de chalumeau (210) est disposée sur les surfaces sous pression des premier et deuxième blocs d'étanchéité (21, 22) ou retourne à sa position d'origine,
dans lequel le deuxième élément mobile (250) comprend :
une pièce mobile (251) fournie entre la pièce de guidage (242) et la tête de chalumeau (210) ; et
une deuxième pièce d'entraînement (252) configurée pour permettre à la tête de chalumeau (210) de se déplacer vers l'avant dans la direction de largeur des premier et deuxième blocs d'étanchéité (21, 22), fournie sur la pièce mobile (251) de sorte que la tête de chalumeau (210) est disposée sur les surfaces sous pression (21a, 22a) des premier et deuxième blocs d'étanchéité (21, 22) ou retourne à sa position d'origine.

9. Appareil de nettoyage selon la revendication 1, comprenant en outre un dispositif d'échappement (300) configuré pour éliminer la fumée, les odeurs et les gaz nocifs qui sont générés pendant que les substances étrangères accumulées sur les surfaces sous pression (21a, 22a) des premier et deuxième blocs d'étanchéité (21, 22) sont éliminées.

10. Appareil de nettoyage selon la revendication 9, dans lequel le dispositif d'échappement (300) comprend un éliminateur d'ozone configuré pour éliminer l'ozone contenu dans les gaz nocifs.

11. Procédé de nettoyage d'un outil d'étanchéité, qui est effectué pour éliminer des substances étrangères accumulées sur des premier et deuxième blocs d'étanchéité (21, 22) fournis symétriquement dans une direction verticale, le procédé de nettoyage comprenant :
un procédé (a) de génération de plasma à travers un dispositif de génération de plasma (100) ; et
un procédé (b) d'éjection du plasma généré dans le dispositif de génération de plasma (100) par un dispositif de chalumeau (200) ayant une tête de chalumeau (210) vers des surfaces sous pression (21a, 22a) des premier et deuxième blocs d'étanchéité (21, 22) pour éliminer les substances étrangères accumulées sur les surfaces sous pression (21a, 22a) des premier et deuxième blocs d'étanchéité (21, 22),
dans lequel, dans le procédé (b), le plasma généré dans le dispositif de génération de plasma (100) est éjecté vers la surface sous pression (21a) du premier bloc d'étanchéité (21) à travers un premier élément de chalumeau (211) fourni dans la tête de chalumeau (210), et le plasma généré dans le dispositif de génération de plasma (100) est éjecté vers la surface sous pression (22a) du deuxième bloc d'étanchéité (22) à travers un deuxième élément de chalumeau (212) fourni dans la tête de chalumeau (200) pour éliminer les substances étrangères accumulées sur les surfaces sous pression (21a, 22a) des premier et deuxième blocs d'étanchéité (21, 22).

12. Procédé de nettoyage selon la revendication 11, dans lequel, dans le procédé (b), quand le plasma est éjecté sur la surface sous pression, un radical d'oxygène (O) existant dans le plasma et un carbone (C), un hydrogène (H) et un oxygène (O) qui existent dans les substances étrangères, réagissent chimiquement les uns avec les autres pour former un dioxyde de carbone (CO₂) et de l'eau (H₂O) afin d'être éliminés.

13. Procédé de nettoyage selon la revendication 11, comprenant en outre, avant d'effectuer le procédé (a), un procédé permettant au dispositif de chalumeau (200) de se déplacer vers l'avant vers les premier et deuxième blocs d'étanchéité (21, 22) de sorte que des premier et deuxième éléments de chalumeau (211, 212) de la tête de chalumeau (210) sont disposés pour être à une distance efficace des surfaces sous pression (21a, 22a) des premier et deuxième blocs d'étanchéité (21, 22).

14. Procédé de nettoyage selon la revendication 11, dans lequel le procédé (b) comprend en outre un procédé permettant au dispositif de chalumeau (200) de se déplacer dans une direction longitudinale des premier et deuxième blocs d'étanchéité (21, 22), éliminant ainsi les substances étrangères accumulées sur la totalité des surfaces sous pression (21a, 22a) des premier et deuxième blocs d'étanchéité (21,22).

15. Procédé de nettoyage selon la revendication 11, dans lequel le procédé (b) comprend en outre un procédé d'inhalation et d'élimination de la fumée, des odeurs et des gaz nocifs qui sont générés pendant que les substances étrangères sont éliminées, à travers un dispositif d'échappement (300).
